# EUROPEAN PATENT SPECIFICATION

(11) **EP 2 314 186 B1**
(45) Date of publication and mention of the grant of the patent: **20.03.2013**
(21) Application number: 09806360.5
(22) Date of filing: 10.08.2009
(51) Int. Cl.: A47J 31/41, A47J 43/27, B67D 1/00, B67D 3/00, B67D 1/10

(54) **AUTOMATIC COCKTAIL PREPARER**
AUTOMATISCHER COCKTAIL-HERSTELLER
MACHINE POUR PRÉPARATION DE COCKTAILS

(30) Priority: 12.08.2008 CN 200810045787
(43) Date of publication of application: 27.04.2011
(73) Proprietor: Lin, Bo, Sichuan 610016 (CN)
(72) Inventor: Lin, Bo, Sichuan 610016 (CN)
(74) Representative: Hryszkiewicz, Danuta
(86) International application number: PCT/CN2009/073163
(87) International publication number: WO 2010/017757

(56) References cited:
- WO-A1-90/06896
- CN-A- 101 206 458
- CN-A- 101 336 805
- CN-Y- 2 586 697
- CN-Y- 2 737 797
- DE-U1-202005 003 266
- US-A- 5 758 571
- US-A1- 2006 118 581
- US-B1- 6 669 053

## Description

The invention relates to a device that is capable of automatically mixing multiple beverages for preparation according to a required ratio, and more particularly to an automatic cocktail preparer.

Conventionally, cocktail is prepared manually, and requires elaboration of professional bartenders since requirement for a preparing technique is high. However, manual mixing is complex and low efficient and cocktail made thereby is very expensive. There are thousands of mixing methods for the cocktail, and people cannot remember all the methods. Moreover, a graduate is used during manual mixing, which easily causes measurement errors, and flavor of cocktail made thereby cannot meet requirements. All the above-mentioned reasons result in high price and unpopularity of the cocktail.

To solve the problem, research has been conducted on automatic cocktail preparers in the prior art. For example, PCT WO 99/02449 disclosed a cocktail preparer, comprising a housing, multiple can bodies disposed in the housing and operating to accommodate liquor, and multiple pipe systems each connecting the can body and a liquor outlet. An electromagnetic valve is disposed on a pipe system connected to each can body, and is controlled via a programmable chip. Outflow of liquor in different can bodies is determined by time of switching on or off the electromagnetic valve whereby implementing mixing according to a ratio. An air-pressure system is added to the preparer so that pressure in each can body and a flow velocity of liquor are constant whereby ensuring good mixing precision and preparing effect. A similar automatic cocktail preparer is disclosed in Chinese Patent CN2737797Y. A further example is given by WO 90/06896.

In the preparer according to the state of the art, to control addition amount of different liquor, an electromagnetic valve is disposed on a pipe system of each can body. As the number of the can bodies is large, the corresponding number of electromagnetic valves is also large, which causes increase in production cost and maintenance cost. In addition, since a flow velocity of liquor from a can is not constant, outflow controlled by the time of switching on or off the electromagnetic valve is not very accurate.

Apparently, to facilitate mechanization and automation of preparation of cocktails, exploration has been carried out in the prior art. A key is to accurately obtain required amount according to a specified amount. The invention successfully solves this problem.

It is an objective of the invention to provide an automatic cocktail preparer that is capable of implementing automatic and accurate mixing of cocktail, and features a simple pipe system and low production cost.

A solution of the invention is: an automatic cocktail preparer according to claim 1.

An additional solution of the invention is:

Preferably, the switching portion is in the shape of a circular plate and capable of rotating with respect to a central axis thereof, and an end of the flow guide channel connected to the liquid-outlet channel is on the central axis of the circular plate.

Preferably, the can bodies are divided into N groups, and N is an integer greater than or equal to 1, the number of the multi-channel switching devices and measuring pumps is N, each group comprises a can body, a multi-channel switching device, and a measuring pump, the can body in each group is connected to a liquid inlet of a corresponding multi-channel switching device via the first honeycomb duct, and the liquid outlet of the multi-channel switching device is connected to an inlet hole of a corresponding measuring pump.

Preferably, the switching portion of the multi-channel switching device is driven by a servo motor, or a step motor with a rotary encoder, and the servo motor or the step motor is closed-loop controlled.

Preferably, an evacuation channel inlet is disposed on the first portion of the multi-channel switching device, the evacuation channel inlet is connected to purified water or ambient air, and to an evacuation channel in the first portion, and the switching portion moves so that the flow guide channel connects the evacuation channel to the liquid-outlet channel of the second portion as the multi-channel switching device is in an evacuation state.

Preferably, a liquor outlet head is removably disposed outside the liquid outlet, a flow guide portion is disposed on the liquor outlet head, and an end of the flow guide portion is contacted with inner wall of a wine glass.

Preferably, a magnetic stirrer and an electric mixer are disposed at the liquor outlet.

Preferably, a cooling device is disposed outside the can body.

Advantages of the invention comprise:

1. thousands of methods for producing cocktail are saved in the programmable control unit, and the programmable control unit implements mixing of the cocktail via the multi-channel switching device and the measuring pump, which cannot be done manually. Based on this, the programmable control unit can be controlled manually whereby adjusting ingredients, which facilitates creative preparing of the cocktail.

2. mixing of the cocktail is fast, compared with manual mixing of cocktail that takes several minutes, the invention only needs several seconds to tens of seconds, which improves efficiency and benefit, and makes the invention suitable for bars, hotels, restaurants, and families.

3. no electromagnetic valve is used for controlling outflow in the pipe system, which greatly reduces the number of the electromagnetic valves, and thus production cost and maintenance cost.

4. the piston-type measuring pump without a one-way valve is used, which implements accurate measuring and mixing. By scientific configuration, a range of the measuring pump can obtain better measuring effect. For example, a pump with an extraction amount of 1/6 ounce (about 5 g) per stroke is selected, by calculating the number of extraction, it is possible to accurately obtain real extraction amount. Compared with conventional measuring pumps and electromagnetic pumps, the measuring pump is more suitable for measurement of mixed cocktail.

5. if the piston-type measuring pump without the one-way valve is used, the invention has better anti-impurity performance, milky and soft impurities containing fruit particles in liquor, as long as they do not cause blockage of the pipe system, will not bring effect to the measuring pump.

FIG. 1 is a side view of an automatic cocktail preparer of an exemplary embodiment of the invention;

FIG. 2 is a front view of an automatic cocktail preparer of FIG. 1;

FIG. 3 is a cross-sectional view of a measuring pump of an automatic cocktail preparer of the invention;

FIG. 4 is a cross-sectional view of a measuring pump and a drive portion thereof;

FIGS. 5 and 6 illustrate a measuring pump and a drive portion thereof in different operating states of FIG. 4;

FIG. 7 is a schematic view of a multi-channel switching device of the invention; and

FIG. 8 is a schematic view of a magnetic stirrer and an electric mixer disposed at a liquor outlet of the invention.
In the drawings, the following reference numbers are used:
**1 -** can body; **3 -** multi-channel switching device; **3-1 -** drive motor of a multi-channel switching device; **4 -** measuring pump; **4-1 -** drive motor of a measuring pump; **5 -** measuring pump; **5-1 -** drive motor of a measuring pump;
**6 -** stirring motor; **7 -** stirrer; **8 -** frame; **9 -** cold closet; **10 -** touch screen; 11 - liquor outlet; **12 -** compressor; **13 -** control box; **15 -** liquid level display; **16 -** first honeycomb duct; **17 -** second honeycomb duct; **18 -** first portion; **19 -** second portion; **20 -** liquid inlet; **21 -** liquid outlet; **22 -** switching portion; 24 - magnetic stirrer; **31 -** plunger; **32 -** pump body; **33 -** pump sleeve; **34 -** sliding block; **35 -** push-pull rod; **36 -** housing; **37 -** rotating block; **38 -** spring piece; **39** - inlet hole; **40 -** outlet hole; **41 -** flow guide hole; **45 -** sealing strip; 46 - adjusting screw; **47 -** sealing ring; **48 -** limit block; **49 -** limit ring; **50 -** elastic component; **51 -** cavity; **52 -** groove; **53 -** groove.

Further description of the invention will be given below in conjunction with accompanying drawings and specific embodiments.

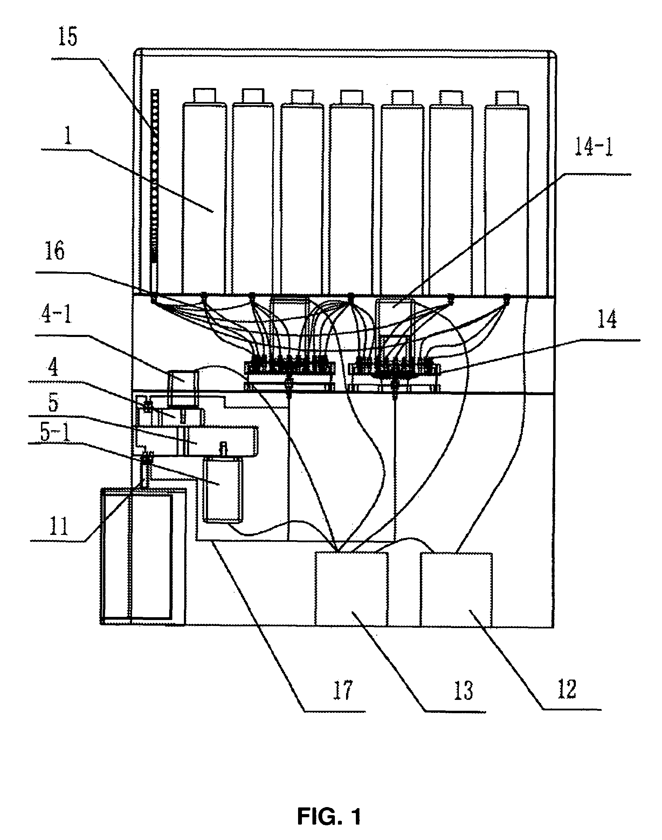

In FIG. 1, an automatic cocktail preparer which invention comprises a frame **8,** and multiple can bodies **1** disposed on the frame and operating to accommodate different types of liquor. The can body **1** is connected to a liquid inlet **20** of a multi-channel switching device **3** via a first honeycomb duct **16,** a liquid outlet **21** of the multi-channel switching device **3** is connected to an inlet hole **39** of a measuring pump **5** via a second honeycomb duct **17,** a liquid outlet **40** of a measuring pump **5** is connected to a liquor outlet **11,** a drive portion of the multi-channel switching device **3** and the measuring pump **5** is electrically connected to a programmable control unit, the programmable control unit is disposed in a control box **13,** the programmable control unit selects a can body **1** connected to the measuring pump by controlling the multi-channel switching device, and controls outflow of liquor in the can body **1** by controlling the measuring pump, and thus a cocktail is produced according to a stored ingredient.

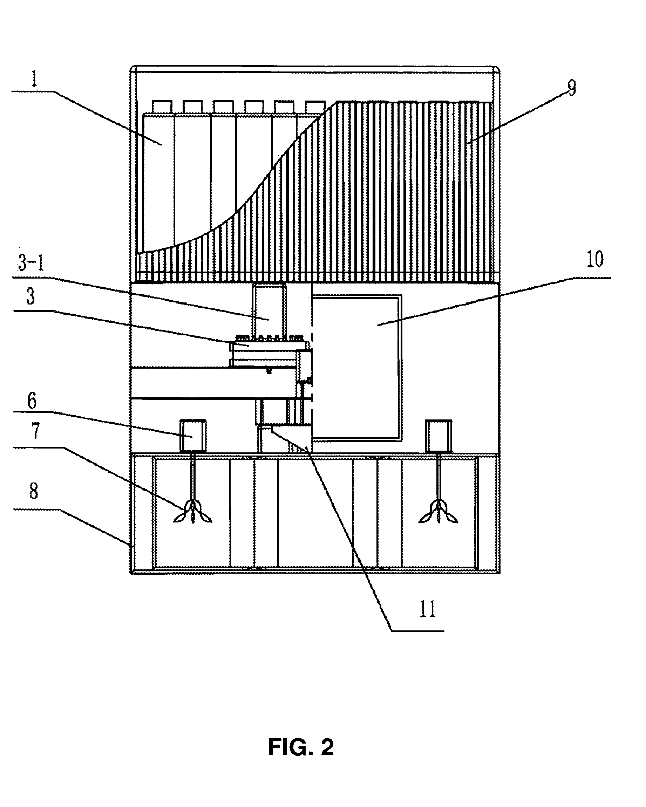

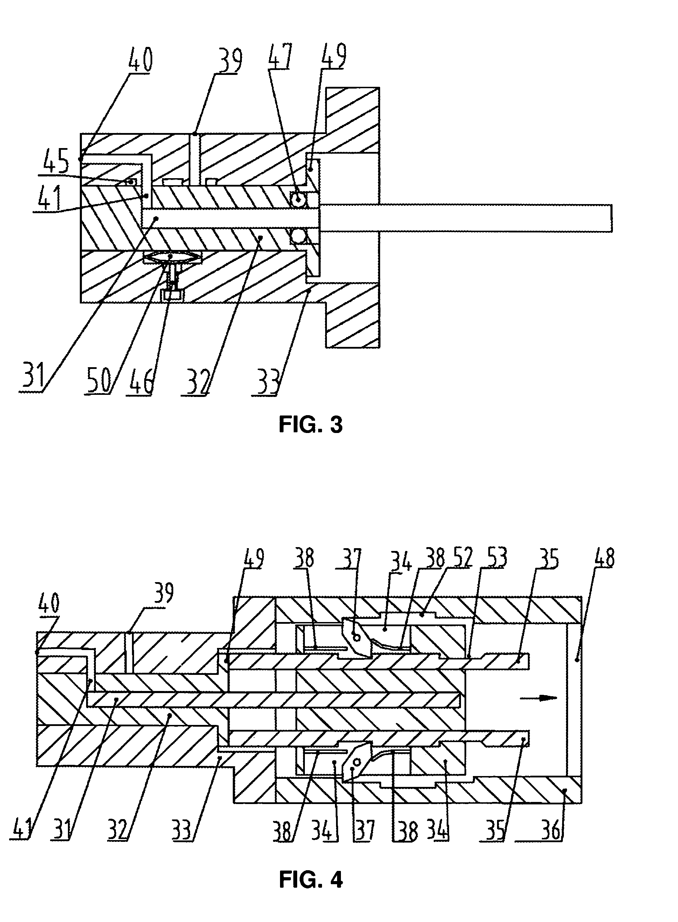

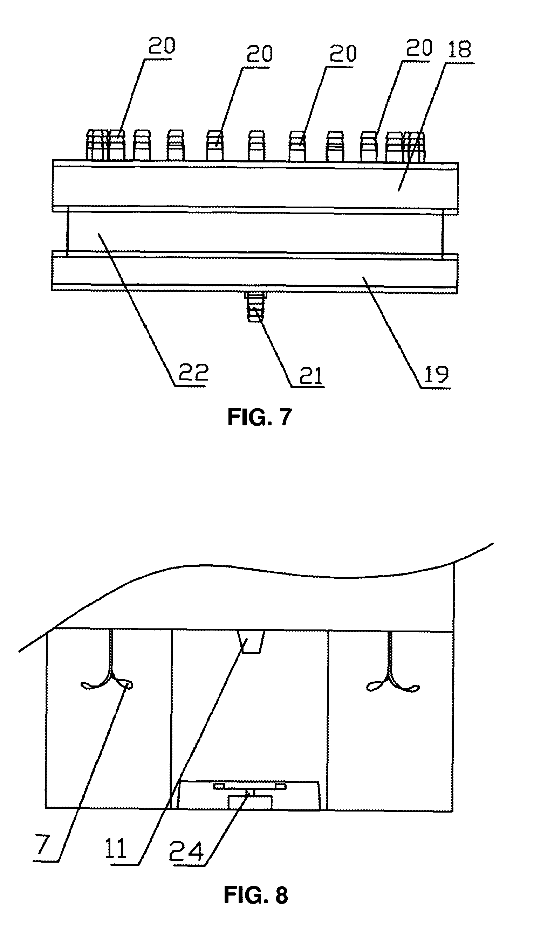

The embodiment 1, as shown in FIG. 2, is an optimized automatic cocktail preparer which comprises a frame **8,** and multiple can bodies **1** disposed on the frame **8** and operating to accommodate different types of basic liquor and beverage. The can body **1** is disposed in a cold closet **9,** the cold closet **9** is driven by a compressor **12,** and capable of controlling temperature of the liquor and the beverage within **4** to **8**°C. A tee is connected to the bottom of each can body **1,** and one outlet of the tee is connected to a liquid level display **15** whereby indicating residual capacity of liquid in the can body **1,** and the other outlet thereof is connected to a liquid inlet **20** of the multi-channel switching device **3** via a soft pipe in the first honeycomb duct **16.** As shown in FIG. 7, the multi-channel switching device **3** comprises a first portion **18,** a second portion **19,** and a switching portion **22.** The first portion **18** and the second portion **19** are rectangular blocks with similar shapes, and the switching portion **22** in the shape of a circular plate is disposed between the first portion **18** and the second portion **19,** and capable of rotating with respect to a central axis thereof. Multiple liquid inlets **20** corresponding to the can bodies **1** are disposed on the first portion **18,** and capable of connecting tens of can bodies **1** accommodating different types of basic liquor and beverage. A liquid outlet **21** is disposed on the second portion **19** and connected to an inlet hole **39** of the measuring pump **5.** A liquid-inlet channel connected to the liquid inlet **20** is disposed in the first portion **18,** and a liquid-outlet channel connected to the liquid outlet **21** is disposed in the second portion **19.** The switching portion **22** is driven by a servo motor controlled by the programmable control unit, or by a step motor with a rotary encoder, and the servo motor or the step motor is closed-loop controlled. As the switching portion **22** rotates to different positions, both ends of the flow guide channel are respectively connected to the liquid-outlet channel and a liquid-inlet channel in a corresponding position whereby connecting the measuring pump **5** to a selected can body **1.** The outlet hole **40** of the measuring pump **5** is connected to the liquor outlet whereby discharging extracted basic liquor or beverage. A preferred measuring pump **5** is shown in FIG. 3, and comprises a pump sleeve **33,** a pump body **32** movably disposed in the pump sleeve **33,** a plunger **31** disposed in a cavity **51** in the pump body **32,** a sealing ring **47** disposed between the plunger **31** and the pump body **32,** a flow guide hole **41** disposed on side wall of the pump body **32** and connected to the cavity **51,** and an inlet hole **39** and an outlet hole **40** disposed on the pump sleeve **33.** Openings of the inlet hole **39** and the outlet hole **40** on inner side of the pump sleeve **33** are on a movement track of the flow guide hole **41** on the pump body **32.** Sealing strips **45** are disposed in the vicinity of the inlet hole **39** and the outlet hole **40.** An elastic component **50** is disposed at the back of the inlet hole **39** and the outlet hole **40,** and between the pump sleeve **33** and the pump body **32,** and an adjusting screw **46** fit therewith is capable of adjusting contact pressure between the pump body **32** and the pump sleeve **33** whereby maintaining tightness between the pump sleeve **33** and the pump body **32.** Sliding of the pump body **32** in the pump sleeve **33** can switch connection states between the flow guide hole **41** and the inlet hole **39** or the outlet hole **40.** Movement of the plunger **31** in the pump body **32,** and connection states between the flow guide hole **41** and the inlet hole **39** or the outlet hole **40** facilitates liquid extraction and emission according to a ration. Since the measuring pump **5** uses no one-way valve, errors caused by the one-way valve are prevented, which makes the invention especially suitable for accurately measuring liquid with small dose. Movement of the pump body **32** and the plunger **31** is driven by the drive motor of the measuring pump **5-1.** The drive motor of the multi-channel switching device **3-1** and the drive motor of the measuring pump **5-1** are controlled by the programmable control unit. The programmable control unit controls switching states of the multi-channel switching device **3,** and extraction dose of the measuring pump **5,** whereby producing a cup of cocktail according to a stored ingredient.

In embodiment 2, to improve sealing performance of the multi-channel switching device **3,** magnetic sealing is used between the first portion **18,** the second portion **19,** and the switching portion **22.**

Embodiment 2, based on embodiment 1, all the can bodies 1 are divided into two groups, two multi-channel switching devices **3** are corresponding to the two groups of can bodies **1,** and two measuring pumps, namely measuring pumps **4** and **5,** are used. The can body **1** in each group is connected to a liquid inlet **20** of a corresponding multi-channel switching device **3** via the first honeycomb duct **16,** and the multi-channel switching device **3** is connected to the measuring pump via the second honeycomb duct **17** whereby forming a set of liquor-mixing channel. Two groups of liquor-mixing channels can simultaneously extract liquor into a wine glass, which reduces preparing time. Based on this embodiment, the number of groups of the can bodies **1**, that of the multi-channel switching devices **3,** and that of the measuring pumps can be increased as required, or measuring pumps with different measurement ranges are matched with each other whereby improving precision of measurement.

In the above-mentioned embodiment, if condiments such as bitters, grenadine and so on need to be added drop by drop, since the number of the condiments is small, the electromagnetic valve can be directly used in a container accommodating the condiments such as bitters, grenadine and so on whereby controlling addition amount.

Based on embodiment 2, to prevent tainting by odor during next time caused by residual liquor or beverage in the soft pipe after mixing of liquor is completed, an evacuation channel inlet is disposed outside the first portion **18** of the multi-channel switching device **3,** and operates to connect purified water or ambient air. The evacuation channel inlet is connected to an evacuation channel in the first portion **18.** As the multi-channel switching device **3** is in an evacuation state, the flow guide channel in the switching portion **22** connects the evacuation channel to the liquid-outlet channel of the second portion so that the measuring pump **5** extracts air or purified water, and evacuates residual liquid in the pipe system. For example, after mixing of liquor and a last extraction stroke of the measuring pump **5** are completed, the programmable control unit controls the switching portion **22** of the multi-channel switching device **3** to rotate whereby connecting the inlet hole **39** of the measuring pump to the evacuation channel inlet, and the measuring pump **5** to finish an empty stroke and emit residual liquid in the soft pipe. Multiple evacuation channel inlets can be used and are interval arranged along with the liquid inlets **20,** whereby making it convenient to select the switching portions **22.**

As shown in FIG. 4, a preferable drive device of a measuring pump in embodiment 2 comprises a housing **36** fixedly connected to the pump sleeve **33,** a push-pull rod **35** fixed to the pump body **32,** a sliding block **34** movably disposed in the housing **36,** and a limit ring **49** disposed at the tail of the pump body **32.** The limit ring **49** is fit with the pump sleeve **33** whereby limiting movement of the pump body **32** to the left. A limit block **48** is disposed on the right of the housing **36** whereby limiting movement of the push-pull rod **35** to the right. The limit ring **49** is fit with the limit block **48** whereby limiting sliding of the pump body **32** in the pump sleeve **33.** The plunger **31** is fixedly connected to the sliding block **34,** the push-pull rod **35** passes through the sliding block **34,** a shaft is disposed on the sliding block **34** between the push-pull rod **35** and the housing **36,** a rotating block **37** is disposed on the shaft, a pair of spring pieces **38** is disposed on both sides of the rotating block **37,** and the top of the spring piece **38** is contacted with one side of the rotating block **37.** A pair of grooves **53** is disposed on the push-pull rod **35** opposite to the housing **36,** and another groove **52** is disposed on inner side of the housing **36** opposite to the groove **53.** The groove **52** is divided into three parts, and a middle part is lower than the other parts. An end of the rotating block **37** slides in the groove **52** of the housing **36,** and the other end slides in the groove **53** on the push-pull rod **35,** and between the grooves **53.** The sliding block **34** is driven by the drive motor of the measuring pump via a linkage part and moves reciprocally

A process of driving the measuring pump by the drive device is as follows:

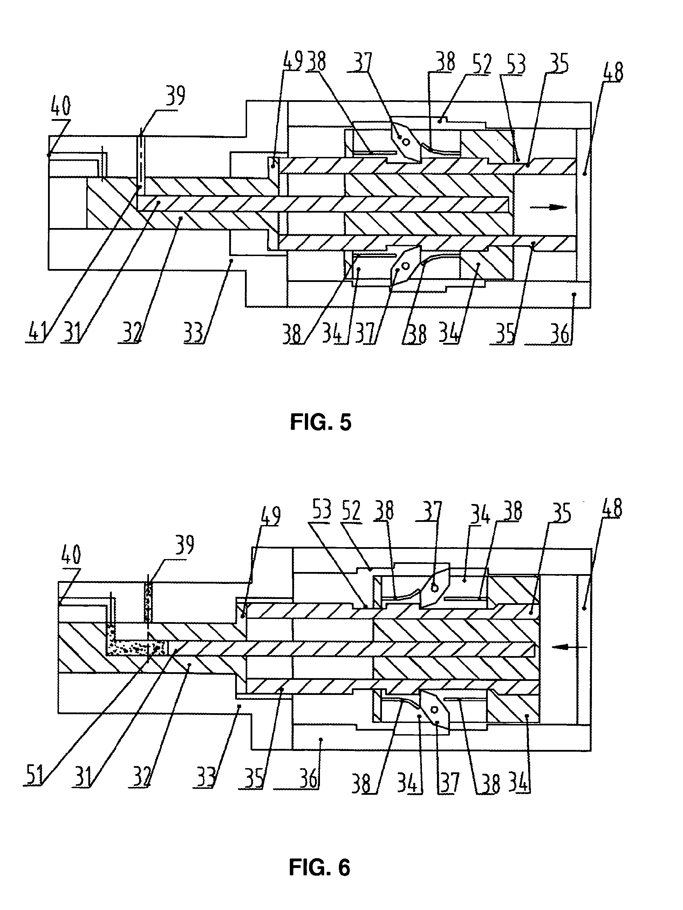

The drive motor of the measuring pump drives the sliding block **34** to move back and forth for one time, and thus a liquid extraction and emission process is completed. During the liquid extraction process, as shown in FIG. 4, the sliding block **34** moves to the right, both ends of the rotating block **37** disposed on the sliding block **34** are in grooves on the housing **36** and the push-pull rod **35.** Since a distance between a left part of the groove **52** on the housing **36** and the rotating block **37** is small, the rotating block **37** is limited by the left part of the groove **52** on the housing **36** and cannot rotate, and is locked on one end of the left groove **53** on the push-pull rod **35** whereby driving the push-pull **35** to move to the right, and forcing the pump body **32** to move to the right along with the plunger **31.** As shown in FIG. 5, as the end of the rotating block **37** contacted with the housing **36** moves to the middle part of the groove **52** on the housing **36,** since the middle part of the groove **52** is lower than the other parts, rotation of the rotating block **37** cannot be limited, and the push-pull rod **35** is limited by the limit block **48** and cannot move to the right, the flow guide hole **41** on the pump body **32** is connected to the inlet hole **39,** and the outlet hole **40** is blocked by the pump body **32.** As the sliding block **34** continues to move to the right, the plunger **31** moves along therewith, the plunger **31** moves with respect to the pump body **32,** and the liquid extraction process is completed. Meanwhile, the left groove **53** on the push-pull rod **35** drives the rotating block **37** to rotate, the end of the rotating block **37** contacted with the push-pull rod **35** slides in the right groove **53** on the push-pull rod **35,** the spring piece **38** on the left of the rotating block **37** is compressed, and presses the rotating block **37** whereby enabling it to be tightly attached to grooves on both sides thereof, and the end of the rotating block **37** contacted with the housing **36** slides to a right part of the groove **52.** A following liquid emission process is shown in FIG. 6, the sliding block **34** moves to the left as being driven by the motor, the rotating block **37** is limited by the right part of the groove **52** on the housing **36** and cannot rotate, and is locked on one end of the right groove **53** on the push-pull rod **35** whereby driving the push-pull **35** to move to the left, and forcing the pump body **32** to move to the left along with the plunger **31.** As shown in FIG. 6, as the end of the rotating block **37** contacted with the housing **36** slides to the middle part of the groove **52** on the housing **36,** since the middle part of the groove **52** is lower than the other parts, rotation of the rotating block **37** cannot be limited, and the push-pull rod **35** is limited by the limit block **49** and cannot move to the left, the flow guide hole **41** on the pump body **32** is connected to the outlet hole **40,** and the inlet hole **39** is blocked by the pump body **32.** The sliding block **34** continues to move to the left and drives the plunger **31** to move along therewith, the plunger **31** moves with respect to the pump body **32,** and thus the liquid emission process is completed. Meanwhile, the right groove **53** on the push-pull rod **35** drives the rotating block **37** to rotate, the end of the rotating block **37** contacted with the push-pull rod **35** slides in the left groove **53** on the push-pull rod **35,** the other end thereof contacted with the housing **36** slides to the left part of the groove **52** on the housing **36,** the spring piece **38** on the right of the rotating block **37** is compressed, and presses the rotating block **37** whereby enabling it to be tightly attached to grooves on both sides thereof, and thus a complete operation process is finished.

Some auxiliary design can be added to the invention based on the above-mentioned embodiments whereby achieving different mixing effects for cocktail. A liquor outlet head is removably disposed outside the liquid outlet, a flow guide portion is disposed on the liquor outlet head, and an end of the flow guide portion is contacted with inner wall of a wine glass. The liquor outlet head operates to slow down an outflow velocity of liquid, so that the liquid slowly flows along the inner wall of the wine glass after being guided via the flow guide portion and thus cocktail with different layers is produced. In addition, a magnetic stirrer is disposed at the liquor outlet **11,** and comprises a motor, and a magnet driven by the motor. During mixing of liquor, the magnetic stirrer drives a stirrer containing metal materials in the wine glass to rotate so that mixing and stirring are simultaneously completed. An electric mixer is disposed on one side of the liquor outlet, and comprises a stirrer **7** driven by a stirring motor **6** and operating to uniformly mix cocktail. A touch screen **10** is disposed on the frame, and makes it convenient for a user to input information to the programmable control unit. A rotatable liquor outlet head is disposed outside the liquid outlet, an outlet of the liquor outlet head faces the wall of a cup. The liquor outlet head rotates as liquor comes out. Under the action of centrifugal force, the liquor is uniformly sprayed on to the wall of the cup and flows down whereby forming separated layers, which improves efficiency of layered cocktail, and time thereof is almost the same as normal cocktail.

## Claims

1. An automatic cocktail preparer, which comprises
a frame (8);
multiple can bodies (1) disposed on said frame (8);
a liquor outlet (11);
a pipe system connecting said multiple can bodies (1) with said liquor outlet (21); said pipe system comprising:
multiple first honeycomb ducts (16);
a multi-channel switching device (3) comprising a first portion (18) having multiple liquid inlets (20) and multiple liquid-inlet channels; a second portion (19) having a liquid outlet (21) and a liquid-outlet channel; a switching portion (22) having a flow guide channel; and a first drive motor (3-1);
a second honeycomb duct (17); and
a measuring pump (4 or 5) comprising an inlet hole (39);
an outlet hole (40); a pump sleeve (33); a pump body (32) having a side wall, a cavity (51), and a flow guide hole (41); a plunger (31); and a second drive motor (4-1 or 5-1); and
a programmable control unit;
**characterized in that**
each of said multiple liquid inlets (20) is connected with one of said multiple can bodies (1) via one of said multiple first honeycomb ducts (16);
said liquid outlet (21) is connected to said inlet hole (39) via said second honeycomb duct (17);
said outlet hole (40) is connected to said liquor outlet (11);
said multiple liquid inlets (20) are connected one with one of said multiple liquid-inlet channels, respectively;
said liquid outlet (21) is connected to said liquid-outlet channel; said switching portion (22) is disposed between said first portion (18) and said second portion (19);said switching portion (22) is controlled by said first drive motor (3-1) to move with respect to said first portion (18) and said second portion (19);
one end of said flow guide channel is fixedly connected to said liquid-outlet channel, and the other end is movable along with said switching portion (22) to connect with one of said multiple liquid-inlet channels;
said flow guide hole (41) is disposed on said side wall, and said flow guide hole (41) is connected to said cavity (51);
said pump body (32) is disposed in said pump sleeve (33);
said plunger (31) is disposed in said cavity;
said pump body (32) together with said flow guide hole (41), and said plunger (31) are controlled by said second drive motor (4-1 or 5-1) to move in a straight line with respect to said pump sleeve (33);
said inlet hole (39) and said outlet hole (40) are disposed on said pump sleeve (33), and openings of said inlet hole (39) and said outlet hole (40) on inner side of said pump sleeve (33) are disposed on a movement track of said flow guide hole (41); and
said first drive motor (3-1) and said second drive motor (4-1 or 5-1) are electrically connected to and controlled by said programmable control unit;

2. The automatic cocktail preparer of claim 1, **characterized in that**
said switching portion (22) is in the shape of a circular plate and capable of rotating with respect to a central axis thereof; and
said end of said flow guide channel connected to said liquid-outlet channel is on said central axis of said circular plate.

3. The automatic cocktail preparer of claim 1, further comprising multiple said multi-channel switching devices (3) and multiple measuring pumps; **characterized in that**
said multiple can bodies (1) are divided into N groups, and N is an integer greater than or equal to 1;
the number of said multi-channel switching devices (3) and measuring pumps (4 or 5) is N;
each group comprises several can bodies (1), a multi-channel switching device (3), and a measuring pump (4 or 5);
said several can bodies (1) in each group are connected to liquid inlets (20) of a corresponding multi-channel switching device (3) via said first honeycomb ducts (16); and
said liquid outlet (21) of said multi-channel switching device (3) is connected to an inlet hole (39) of a corresponding measuring pump (4 or 5).

4. The automatic cocktail preparer of claim 2, **characterized in that**
said switching portion (22) of said multi-channel switching device (3) is driven by a servo motor, or a step motor with a rotary encoder; and
said servo motor or said step motor is closed-loop controlled.

5. The automatic cocktail preparer of claim 1, **characterized in that**
an evacuation channel inlet is disposed on said first portion (18) of said multi-channel switching device (3);
said evacuation channel inlet is connected to purified water or ambient air, and to an evacuation channel in said first portion (18); and
said switching portion (22) moves so that said flow guide channel connects said evacuation channel to said liquid-outlet channel of said second portion (19) as said multi-channel switching device (3) is in an evacuation state.

6. The automatic cocktail preparer of claim 1, **characterized in that**
a liquor outlet head is removably disposed outside said liquor outlet (11);
a flow guide portion is disposed on said liquor outlet head; and
an end of said flow guide portion is contacted with inner wall of a wine glass.

7. The automatic cocktail preparer of claim 1, **characterized in that** a magnetic stirrer and an electric mixer are disposed at said liquor outlet (11).

8. The automatic cocktail preparer of claim 1, **characterized in that** a cooling device is disposed outside said multiple can bodies.

9. The automatic cocktail preparer of claim 1, **characterized in that** magnetic sealing is used between said first portion (18), said second portion (19), and said switching portion (22).

10. The automatic cocktail preparer of claim 1, **characterized in that** a rotatable liquor outlet head is disposed outside said liquor outlet (11), and an outlet of said liquor outlet head faces the wall of a cup.

## Patentansprüche

1. Ein automatische Cocktail-Aufbereiter, bestehend aus einen Rahmen (8);
einen mehrfach Dosenkörper (1), der auf dem besagten Rahmen (8) angeordnet ist;
einen Flotte-Auslass (11);
ein Rohrsystem das den besagten mehrfach Dosenkörper (1) mit dem besagten Flotte-Auslass (21) verbindet; das besagten Rohrsystem bestehend aus:
mehrfach ersten wabenförmigen Kanälen (16),
eine Mehrkanal-Schaltvorrichtung (3) bestehend aus einen ersten Abschnitt (18) mit mehrfach Flüssigkeitseinlässen (20) und mehrfach Flüssigkeit Einlasskanäle; einen zweiten Abschnitt (19) mit einem Flüssigkeitsauslass (21) und einem Flüssigkeits-Auslasskanal, einen Schaltabschnitt (22) mit einem Strömung-Führungskanal; und einen ersten Antriebsmotor (3-1);
einen zweiten wabenförmigen Kanal (17); und
eine Messpumpe (4 oder 5) bestehend aus einem Einlassloch (39), einem Auslassloch (40), eine Pumpe-Hülse (33); einen Pumpkörper (32) mit einem Seitenwand, einem Hohlraum (51), und ein Strömung Führungsloch (41); einen Kolben (31); und einen zweiten Antriebsmotor (4-1 oder 5-1), und einen programmierbaren Steuereinheit;
**dadurch gekennzeichnet, dass**
jede der mehrfach Flüssigkeitseinlässe (20) mit einem von dem besagten mehrfach Dosenkörper (1) über einen der besagten mehrfach ersten wabenförmigen Kanälen (16) verbunden ist;
der besagtem Flüssigkeitsauslass (21) mit dem besagten Einlassloch (39) über den besagten zweiten wabenförmigen Kanal (17) verbunden ist;
das besagte Auslassloch (40) mit dem besagten Lauge-Auslass (11) verbunden ist;
die besagten mehrfach Flüssigkeitseinlässe jeweils (20) eins-zu-eins mit einer der besagten mehrfach Flüssigkeits-Einlasskanäle verbunden sind;
der besagten Flüssigkeitsauslass (21) mit dem besagten Flüssigkeits-Auslasskanal verbunden ist;
der besagten Schaltabschnitt (22) zwischen dem besagten ersten Abschnitt (18) und dem besagten zweiten Abschnitt (19) angeordnet ist; der besagten Schaltabschnitt (22) durch den ersten besagten Antriebsmotor (3-1) gesteuert wird, um sich in Bezug auf den ersten besagten Abschnitt (18) und den zweiten besagten Abschnitt (19) zu bewegen;
ein Ende des besagten Strömung-Führungskanals ist fest verbunden mit dem Flüssigkeit-Auslasskanal, und das andere Ende ist beweglich zusammen mit dem besagten Schaltabschnitt (22), um sich mit einem der besagten mehrfach Flüssigkeit-Einlasskanäle zu verbinden;
das besagte Strömung-Führungsloch (41) ist angeordnet auf den besagten Seitenwand und das besagte Strömung-Führungsloch (41) ist verbunden mit dem besagten Hohlraum (51);
der besagten Pumpkörper (32) ist angeordnet in der Pumpe Hülse (33);
der besagten Kolben (31) ist angeordnet in dem besagten Hohlraum;
der besagten Pumpkörper (32) zusammen mit dem besagten Strömung-Führungsloch (41) und dem besagten Kolben (31) werden durch den zweiten Antriebsmotor (4-1 oder 5-1) gesteuert um sich in einer geraden Linie in Bezug auf die besagten Pumpe Hülse zu bewegen (33);
das besagte Einlassloch (39) und das besagte Auslassloch (40) an dem besagten Pumpe Hülse (33) angeordnet sind und die Öffnungen des besagten Einlasslochs (39) und des besagten Auslasslochs (40) an der Innenseite des besagten Pumpe Hülse (33) angeordnet sind auf einer Bewegungsbahn des besagten Strömung-Führungslochs (41); und
den ersten besagten Antriebsmotor (3-1) und den zweiten besagten Antriebsmotor (4-1 oder 5-1) elektrisch verbunden sind und von dem besagten programmierbaren Steuereinheit gesteuert werden;

2. Der automatische Cocktail Aufbereiter nach Anspruch 1, **dadurch gekennzeichnet, dass**
der besagten Schaltabschnitt (22) ist in der Form einer kreisförmigen Platte und ist drehfähig in Bezug auf einen zentrale Achse davon; und
das besagten Ende des Strömung-Führungskanals verbunden ist mit dem besagten Flüssigkeits-Auslasskanal auf dem besagten zentralen Achse der besagten kreisförmigen Platte.

3. Der automatische Cocktail Aufbereiter nach Anspruch 1, ferner bestehend aus mehreren die besagten Mehrkanal-Schaltgeräte (3) und mehrere Messpumpen; **dadurch gekennzeichnet, dass**;
der besagten mehrfach Dosenkörper (1) in N-Gruppen unterteilt ist, und N eine ganze Zahl größer oder gleich 1 ist;
die Anzahl der besagten Mehrkanal-Schaltgeräte (3) und Messpumpen (4 oder 5) ist N;
jede Gruppe besteht aus mehreren Dosenkörper (1), eine Mehrkanal-Schaltvorrichtung (3), und einen Messpumpe (4 oder 5);
der besagten mehrfach Dosenkörper (1) in jeder Gruppe mit der Flüssigkeitseinlässe (20) einer entsprechenden Mehrkanal-Schalteinrichtung (3) über die besagten ersten wabenförmigen Kanälen (16) verbunden sind; und
der besagten Flüssigkeitsauslass (21) der besagten Mehrkanal-Schaltvorrichtung (3) mit einem Einlassloch (39) einer entsprechenden Messpumpe (4 oder 5) verbunden ist.

4. Der automatische Cocktail Aufbereiter nach Anspruch 1, **dadurch gekennzeichnet, dass**
der besagten Schaltabschnitt (22) der besagten Mehrkanal-Schalteinrichtung (3) durch einen Servomotor oder einen Schrittmotor mit einem Drehgeber angetrieben wird; und den besagten Servomotor oder besagten Schrittmotor über einen geschlossener Schleife gesteuert wird.

5. Der automatische Cocktail Aufbereiter nach Anspruch 1, **dadurch gekennzeichnet, dass**
einen Evakuierungskanal-Einlass auf den besagten ersten Abschnitt (18) der besagten Mehrkanal-Schaltvorrichtung (3) angeordnet ist;
der besagten Evakuierungskanal Einlass mit gereinigtem Wasser oder Umgebungsluft verbunden ist, und mit einem Evakuierungskanal in dem besagten ersten Abschnitt (18); und
dem besagten Schaltabschnitt (22) sich bewegt, so dass der besagten Strömung Führungskanal, den besagten Evakuierungskanal mit dem besagten Flüssigkits-Auslasskanal des besagten zweiten Abschnitts (19) verbindet, da die besagten Mehrkanal-Schaltvorrichtung (3) in einer Evakuierung Zustand ist.

6. Der automatische Cocktail Aufbereiter nach Anspruch 1, **dadurch gekennzeichnet, dass**
einen Flotte-Auslasskopf entfernbar außerhalb der besagten Lauge Auslass (11) angeordnet ist;
einen Strömung-Führungsabschnitt auf der Lauge-Auslasskopf angeordnet ist; und
ein Ende des besagten Strömung-Führungsabschnitt mit dem Innenwand eines Weinglases kontaktiert wird.

7. Der automatische Cocktail Aufbereiter nach Anspruch 1, **dadurch gekennzeichnet, dass** ein Magnetrührer und einen elektrischen Mixer an dem besagtem Liquor-Auslass (11) angeordnet werden.

8. Der automatische Cocktail Aufbereiter nach Anspruch 1, **dadurch gekennzeichnet, dass** eine Kühleinrichtung außerhalb des besagten mehrfach Dosenkörpers angeordnet ist.

9. Der automatische Cocktail Aufbereiter nach Anspruch 1, **dadurch gekennzeichnet, dass** magnetischen Dichtelement verwendet wird zwischen dem ersten besagten Abschnitt (18), dem zweiten besagten Abschnitt (19), und dem besagten Schaltabschnitt (22).

10. Der automatische Cocktail Aufbereiter nach Anspruch 1, **dadurch gekennzeichnet, dass** einen drehbare Lauge-Auslasskopf außerhalb der besagten Lauge-Auslass (11) angeordnet ist, und ein Auslass des besagten Lauge-Auslasskopfs zur Wand eines Bechers gerichtet ist.

## Revendications

1. Un préparateur de cocktails automatique, qui comprend un cadre (8) ;
plusieurs bidons (1) disposés sur ledit cadre (8) ;
une sortie de la boisson alcoolisée (11);
un système de tuyaux reliant lesdits bidons (1) avec ladite sortie de la boisson alcoolisée (21) ; ledit système de tuyau comprenant :
de multiples premiers canaux en configuration nid d'abeilles(16) ;
un dispositif de commutation à canaux multiples (3) comprenant une première partie (18) ayant de multiples entrées de liquide (20) et de multiples canaux d'entrée de liquide ; une seconde partie (19) ayant une sortie de liquide (21) et un canal de sortie de liquide ; une section de commutation (22) comportant un canal de guidage de l'écoulement, et un premier moteur d'entraînement (3-1) ;
un second canal en configuration nid d'abeilles (17), et
une pompe doseuse (4 ou 5) comprenant une embouchure d'entrée (39), une embouchure de sortie (40), un manchon de pompe (33), un corps de pompe (32) comportant une paroi latérale, une cavité (51), et une embouchure de guidage de l'écoulement (41) ; un piston (31), un second moteur d'entraînement (4-1 ou 5-1), et
une unité de commande programmable ;
**caractérisé en ce que**
chacune desdites multiples entrées de liquide (20) est reliée à l'un desdits multiples bidons (1) par l'un desdits premiers canaux en configuration nid d'abeille (16) ;
ladite sortie de liquide (21) est reliée à ladite embouchure d'entrée (39) par ledit second canal en configuration nid d'abeilles (17) ;
ladite embouchure de sortie (40) est reliée à ladite sortie de la boisson alcoolisée (11) ;
lesdites multiples entrées de liquide (20) sont reliées une à une à l'un desdits multiples canaux d'entrée de liquide, respectivement ;
ladite sortie de liquide (21) est reliée audit canal de sortie de liquide ;
ladite section de commutation (22) est disposée entre ladite première partie (18) et ladite seconde partie (19) ; ladite section de commutation (22) est commandée par ledit premier moteur d'entraînement (3-1) pour se déplacer par rapport à ladite première partie (18) et ladite seconde partie (19) ;
une extrémité dudit canal de guidage de l'écoulement est fixée audit canal de sortie de liquide, et l'autre extrémité est mobile le long de ladite section de commutation (22) pour se connecter à l'un desdits multiples canaux d'entrée de liquide ;
ledit orifice de guidage d'écoulement (41) est disposé sur ladite paroi latérale, et ledit orifice de guidage d'écoulement (41) est relié à ladite cavité (51) ;
ledit corps de pompe (32) est disposé dans ledit manchon de pompe (33) ;
ledit piston (31) se trouve à l'intérieur de ladite cavité ;
ledit corps de pompe (32), ledit orifice de guidage d'écoulement (41) et ledit piston (31) sont commandés par ledit second moteur d'entraînement (4-1 ou 5-1) pour se déplacer en ligne droite par rapport audit manchon de pompe (33) ;
ladite embouchure d'entrée (39) et ladite embouchure de sortie (40) sont disposées sur ledit manchon de pompe (33), et les ouvertures de ladite embouchure d'entrée (39) et de ladite embouchure de sortie (40) sur la face interne dudit manchon de pompe (33) sont disposées sur la trajectoire de déplacement dudit orifice de guidage d'écoulement (41), et
ledit premier moteur d'entraînement (3-1) et ledit second moteur d'entraînement (4-1 ou 5-1) sont électriquement reliés à et commandés par ladite unité de commande programmable ;

2. Le préparateur de cocktails automatique de la demande 1, **caractérisé en ce que**
ladite section de commutation (22) se présente sous la forme d'une plaque circulaire et capable de tourner par rapport à l'axe central de celle-ci, et
ladite extrémité dudit canal de guidage d'écoulement reliée audit canal sortie de liquide se trouve sur ledit axe central de ladite plaque circulaire.

3. Le préparateur de cocktails automatique de la demande 1, comprenant en outre plusieurs dispositifs de commutation à canaux multiples (3) et plusieurs pompes doseuses ;
**caractérisé en ce que**
lesdits multiple bidons (1) sont divisés en groupes de N, et N est un nombre entier supérieur ou égal à 1 ;
le nombre desdits dispositifs de commutation à canaux multiples (3) et les pompes doseuses (4 ou 5) est N ;
chaque groupe comprend plusieurs bidons (1), un dispositif de commutation à canaux multiples (3), et une pompe doseuse (4 ou 5) ;
lesdits bidons (1) de chaque groupe sont reliés aux entrées de liquide (20) d'un dispositif de commutation à canaux multiples correspondant (3) par lesdits premiers canaux en configuration nid d'abeilles (16), et
ladite sortie de liquide (21) dudit dispositif de commutation à canaux multiples (3) est reliée à une embouchure d'entrée (39) d'une pompe doseuse correspondante (4 ou 5).

4. Le préparateur de cocktails automatique de la demande 2, **caractérisé en ce que**
ladite section de commutation (22) dudit dispositif de commutation à canaux multiples (3) est entraînée par un servomoteur ou un moteur pas à pas avec un encodeur rotatif, et
ledit servomoteur ou ledit moteur pas à pas est commandé au moyen d'un circuit fermé.

5. Le préparateur de cocktails automatique de la demande 1, **caractérisé en ce que**
une entrée du canal d'évacuation est placée sur ladite première partie (18) dudit dispositif de commutation à canaux multiples (3) ;
ladite entrée du canal d'évacuation est raccordée à de l'eau purifiée ou à l'air ambiant, et à un canal d'évacuation dans ladite première partie (18), et
ladite section de commutation (22) se déplace de telle sorte que ledit canal de guidage d'écoulement relie ledit canal d'évacuation à ladite embouchure de sortie de liquide de ladite seconde partie (19) tandis que ledit dispositif de commutation à canaux multiples (3) est en position d'évacuation.

6. Le préparateur de cocktails automatique de la demande 1, **caractérisé en ce que**
Une tête de sortie de la boisson alcoolisée est placée de façon à être retirée, à l'extérieur de ladite sortie de la boisson alcoolisée (11) ;
une partie du guidage d'écoulement se trouve sur ladite tête de sortie de la boisson alcoolisée, et
une extrémité de ladite portion de guidage de l'écoulement est en contact avec la paroi intérieure d'un verre.

7. Le préparateur de cocktails automatique de la demande 1, **caractérisé en ce qu'**un agitateur magnétique et un batteur électrique sont disposés au niveau de ladite sortie d'alcool (11).

8. Le préparateur de cocktails automatique de la demande 1, **caractérisé en ce qu'**un dispositif de refroidissement est disposé à l'extérieur desdits bidons.

9. Le préparateur de cocktails automatique de la demande 1, **caractérisé en ce qu'**un joint d'étanchéité magnétique est utilisé entre ladite première partie (18), ladite seconde partie (19), et ladite section de commutation (22).

10. Le préparateur de cocktails automatique de la demande 1, **caractérisé en ce qu'**une tête de sortie de boisson alcoolisée rotative est disposée à l'extérieur de ladite sortie de la boisson alcoolisée (11), et un orifice de ladite tête de sortie de la boisson alcoolisée se trouve face à la paroi d'un verre.
